# EUROPÄISCHE PATENTANMELDUNG

(11) **EP 0 593 885 A1**
(43) Veröffentlichungstag der Anmeldung: **27.04.1994**
(21) Anmeldenummer: 93114011.5
(22) Anmeldetag: 02.09.1993
(51) Int. Cl.: B29C 47/08, B29C 33/20, B23Q 1/00

(54) **Spritzkopf für einen Extruder**

(30) Priorität: 20.10.1992 DE 4235280
(71) Anmelder: PAUL TROESTER MASCHINENFABRIK, D-30519 Hannover (DE)
(72) Erfinder: Gohlisch, Hans-Joachim, Dipl.-Ing., D-30519 Hannover (DE); Kaufmann, Reinhold, D-37269 Eschwege (DE)
(74) Vertreter: Junius, Walther, Dr.

(57) **Zusammenfassung**

Die Erfindung betrifft einen Spritzkopf für einen Extruder, insbesondere für die Benutzung in einer Extruder-Kalander-Kombination, aber auch als einzelner Breit- oder Protektorspritzkopf, bestehend aus einem fest mit dem Extruderzylinder (2) zu verbindenden, den zu extrudierenden Strang zylindrisch umgebenden Teil, mit welchem zumindest ein weiteres den Extrusionsspalt hälftig umgebendes klappbares Teil (5,7) über ein Gelenk verbunden ist, welches mittels zweier beidseitig schwenkbar angeordneter Preßeinheiten (11) mit dem anderen den Extrusionsspalt umgebenden Teil dichtend zusammenpreßbar ist. Es ist die Aufgabe der Erfindung, die den Spritzkopf zusammenklammernden Kolben-Zylinder-Einheiten so anzubringen, daß der Extruder mit dem an ihm befestigten Spritzkopf auch ohne Kalander für die Herstellung unkalandrierter bzw ungeglätteter oder auch profilierter Platten benutzt werden kann und daß der Abstand des Extruders vom Kalander auch während des Betriebes geändert werden kann. Die Erfindung besteht darin, daß die Preßeinheiten (11) Kolben-Zylinder-Einheiten sind, die im wesentlichen vertikal stehend angeordnet sind und daß die Preßeinheiten je an einem Halter (22) angeordnet sind, der um eine im wesentlichen vertikal verlaufende Achse verschwenkbar ist.

## Beschreibung

Die Erfindung betrifft einen Spritzkopf für einen Extruder, insbesondere für die Benutzung in einer Extruder-Kalander-Kombination, bestehend aus einem fest mit dem Extruderzylinder zu verbindenden, den zu extrudierenden Strang zylindrisch umgebenden Teil, mit welchem zumindest ein weiteres den Extrusionsspalt hälftig umgebendes klappbares Teil über ein Gelenk verbunden ist, welches mittels zweier beidseitig schwenkbar angeordneter Preßeinheiten mit dem anderen den Extrusionsspalt umgebenden Teil dichtend zusammenpreßbar ist.

In ähnlicher Weise ist die Extruder-Kalander-Kombination der DE-29 37 204 C2 aufgebaut: Am Kalander befestigte, aus einem Zuganker und einer diesen betätigenden Kolben-Zylinder-Einheit aufgebaute Preßeinheiten pressen die zwei Teile eines horizontal geteilten, am Extruder befestigten Spritzkopfes zusammen. Dadurch entsteht eine für Reinigungszwecke lösbare Verbindung zwischen Extruder und Kalander, die es aber niemals gestattet, den Extruder ohne den Kalander zu benutzen, und die es auch nicht gestattet, während des Betriebes den Abstand zwischen dem Mundstück des Spritzkopfes und dem Walzenspalt des Kalanders zu verstellen, wie es zur Einstellung eines das Extrudat optimal im Walzenspalt bearbeitenden Knetes von Vorteil ist (DE 40 34 268 C2).

Durch US-PS 40 60 368 ist eine Extruder-Kalander-Kombination bekannt geworden, deren beide Spritzkopfhälften durch mehrere Kolben-Zylinder-Einheiten zusammengehalten werden, die in vertikaler Richtung angeordnet auch den unverschiebbaren Zusammenhalt von Extruder und Kalander während des Betriebes bewirken.

Dieser unverschiebbare Zusammenhalt von Extruder und Kalander ist dort von Nachteil, wo der Abstand zwischen Extruder und Kalander aus Gründen einer Einstellung der Bearbeitungsintensität im Walzenspalt während des Betriebes verändert werden soll, wie dieses aus der DE-PS 40 09 917 vorgeschlagen ist. Hier ist es notwendig, den Spritzkopf des Extruders völlig vom Kalander zu trennen, um die beiden Arbeitsgeräte relativ zueinander während des Betriebes verschieben zu können.

Das ist bei einer eigenen vorbenutzten Ausführungsform der Fall, bei der der obere verschwenkbare Spritzkopfteil durch zwei seitlich angeordnete Kolben-Zylinder-Einheiten mit dem unteren Spritzkopfteil zusammengepreßt wird und bei der die Kolben-Zylinder-Einheiten am unteren Spritzkopfteil jeweils mittels eines Gelenkes befestigt sind, dessen Achse parallel zur Achse des Extruderzylinders verläuft. Diese Ausführungsform macht es erforderlich, daß jeder Austauschspritzkopf ebenfalls mit einem Paar von Kolben-Zylinder-Einheiten ausgerüstet ist, welche bei einem Austausch des Spritzkopfes mit ihren Zu- und Ableitungen ab- und wieder angeschlossen werden müssen, wenn man es nicht vorzieht, die beiden Kolben-Zylinder-Einheiten als solche vom Unterteil des Spritzkopfes zu demontieren und am Unterteil des Austauschspritzkopfes wieder anzubringen. Diese Handhabung ist umständlich. Durch die beiden Kolben-Zylinder-Einheiten wird das Gewicht des Unterteiles maßgeblich erhöht. Bei einem klappbaren Unterteil wird die Handhabung durch die im abgespreizten Zustand stehenden Kolben-Zylinder-Einheiten erschwert.

Die Erfindung vermeidet diese Nachteile. Es ist die Aufgabe der Erfindung, die den Spritzkopf zusammenklammernden Kolben-Zylinder-Einheiten so anzubringen, daß der Extruder mit dem an ihm befestigten Spritzkopf auch ohne Kalander für die Herstellung unkalandrierter bzw ungeglätteter Platten benutzt werden kann und daß der Abstand des Extruders vom Kalander auch während des Betriebes geändert werden kann. Weiter ist es Aufgabe dervorliegenden Erfindung, die den Spritzkopf zusammenklammernden Kolben-Zylinder-Einheiten so anzubringen, daß sie das Gewicht des Spritzkopfunterteiles nicht erhöhen, daß die Handhabung erleichtert ist und daß sie bei jedem Austauschspritzkopf universell wieder einsetzbar sind.

Die Erfindung besteht darin, daß die Preßeinheiten Kolben-Zylinder-Einheiten sind, die im wesentlichen vertikal stehend angeordnet sind und daß die Preßeinheiten je an einem Halter angeordnet sind, der um eine im wesentlichen vertikal verlaufende Achse verschwenkbar ist.

Diese Anordnung erbringt den wesentlichen Vorteil, daß die während des Betriebes nicht trennbare Extruder-Spritzkopf-Einheit, die auch während der Reinigungsvorgänge nicht voneinander getrennt wird, nunmehr während des Betriebes nicht mehr mit dem Kalander zusammenhängt, sodaß der Abstand Extruder-Kalander während des Betriebes verändert werden kann und somit dem sich im Walzenspalt bildenden Knet eine optimale Größe und Gestalt gegeben werden kann.

Noch wesentlicher ist der Vorteil, daß der Extruder auch ohne den Kalander benutzt werden kann. Dieser Vorteil führt zu einer besseren Maschinenauslastung und tritt überall dort zutage, wo der Extruder zeitweise mit und zeitweise ohne Kalander betrieben wird.

Als weiterer besonderer Vorteil ist es auch anzusehen, daß ein in dieser Weise ausgebildeter Standardextruder zusammen mit nahezu jedem Standardkalander betrieben werden kann und daß darüber hinaus, wenn ein Spritzkopf mit auswechselbaren, den Fließweg des Extrudates in unterschiedlicher Weise begrenzenden Platten zum Einsatz am Extruder kommt, auch ein Standardspritzkopf verwendet werden kann. Durch die Verwendung derartiger Standardgeräte wird deren Einsatzmöglichkeit vergrößert und der Anschaffungspreis verringert. Es können bereits in einem Betrieb vorhandene Kalander mit dem erfindungsgemäß gestalteten Extruder zusammen zum Einsatz gebracht werden, es kann aber bei einer Neuanschaffung auch zuerst der Extruder mit dem Spritzkopf beschafft werden und dieser dann mit einem viel später beschafften Kalander zum gemeinsamen Einsatz gebracht werden.

Diese Anordnung beläßt die Kolben-Zylinder-Einheiten an einem Ort, wo sie den Montage- und Reinigungsarbeiten nicht in Wege stehen, wo sie das Gewicht des Unterteiles nicht beeinflussen, und läßt die Kolben-Zylinder-Einheiten für alle Austauschspritzköpfe universell einsetzbar sein. Dabei ist gewährleistet, daß Spritzkopf und nachgeschalteter Kalander völlig unabhängig voneinander sind.

Diese Anordnung läßt sich in besonders einfacher und vorteilhafter Weise dadurch realisieren, daß die mit den Preßeinheiten zusammenzupressenden Teile beidseitig eine Ausnehmung aufweisen, daß die Kolbenstange der Preßeinheiten an ihrem Ende ein Widerlager trägt und daß die Kolbenstange im Betriebszustand des Spritzkopfes in dieser Ausnehmung befindlich ist.

Um ein berührungsloses Einschieben der Preßeinheiten in die Betriebsstellung zu gewährleisten, ist es vorteilhaft, wenn die Preßeinheit und/oder ihr Halter vertikal verschiebbar gelagert ist.

Baulich läßt sich diese Vorrichtung sehr einfach konstruieren, wenn der Halter mit seinem einen Ende einen Lagerzapfen umfaßt, und wenn im Lagerzapfen eine Kolben-Zylinder-Einheit für das Anheben des Halters angeordnet ist.

Dabei ist es vorteilhaft für eine leichte Verschwenk- und Verschiebbarkeit der zu bewegenden Maschinenteile, wenn der Halter auf seinem den Lagerzapfen umgebenden Ende mit einem Kugellager versehen ist, gegen das die Kolbenstange der Kolben-Zylinder-Einheit für das Anheben des Halters drückt.

Die Verschwenkung der Preßeinheiten läßt sich leicht mechanisiert durchführen, wenn mindestens eine weitere Kolben-Zylinder-Einheit für die Verschwenkung der Halter der Preßeinheiten vorgesehen ist.

Diese weitere Kolben-Zylinder-Einheit für die Verschwenkung der Halter der Preßeinheiten läßt sich besonders einfach so anbringen, daß an jedem der beiden Halter ein Verschwenkhebel angeordnet ist, an dessen Ende diese Kolben-Zylinder-Einheit für die Verschwenkung der Halter der Preßeinheiten angelenkt ist.

Die Verschwenkung läßt sich dann mechanisiert in exakter Weise durchführen, wenn Anschläge für die Begrenzung des Weges der Halter der Preßeinheiten vorgesehen sind.

Mit einer selbsttätig arbeitenden , durch einen Handschalter ausgelösten Schaltung läßt sich der Bewegungsablauf des Öffnens und Schließens des Spritzkopfes dann einfach durchführen, wenn Endschalter an der Begrenzung des Weges der Halter der Preßeinheiten vorgesehen sind, die die Magnetventile für die Zufuhr von Druckmedium in die die Halter verschiebende(n) Kolben-Zylinder-Einheit(en) schalten.

Ein solcher selbsttätiger Bewegungsablauf läßt sich in einfacher Weise realisieren, wenn eine Schaltung mit zwei Einschaltern vorgesehen ist, dessen einer einen Bewegungsablauf
- Verschwenkung des oder der klappbaren Kopfteile in die Betriebsstellung
- Verschwenkung der Halter der Preßeinheiten in die Betriebsstellung
- Druckentlastung der den Halter anhebenden Kolben-Zylinder-Einheit
- Inbetriebsetzung der Preßeinheiten
und dessen anderer einen Bewegungsablauf
- Druckentlastung in den Preßeinheiten
- Druckbeaufschlagung der den Halter anhebenden Kolben-Zylinder-Einheit
- Verschwenkung der Halter der Preßeinheiten in die Außerbetriebsstellung
- Verschwenkung des oder der klappbaren Kopfteile in die Außerbetriebsstellung
einleitet.

Das Wesen der Erfindung ist nachstehend anhand eines in der Zeichnung schematisch dargestellten Ausführungsbeibeispieles näher erläutert. Es zeigen:
- Fig. 1: eine Seitenansicht des am Extruderzylinder montierten Spritzkopfes,

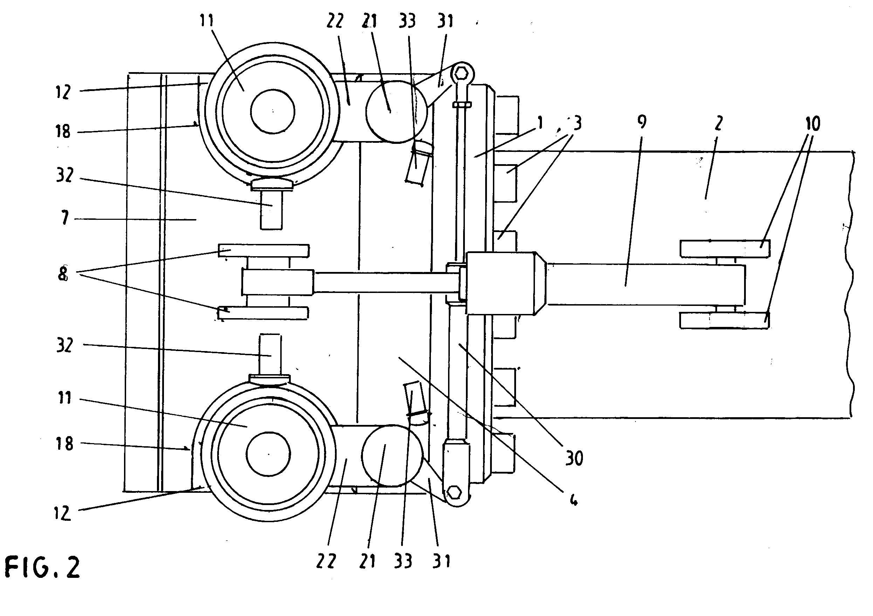

- Fig. 2: eine Ansicht von oben auf den Spritzkopf mit in Betriebsstellung befindlichen Preßeinheiten,

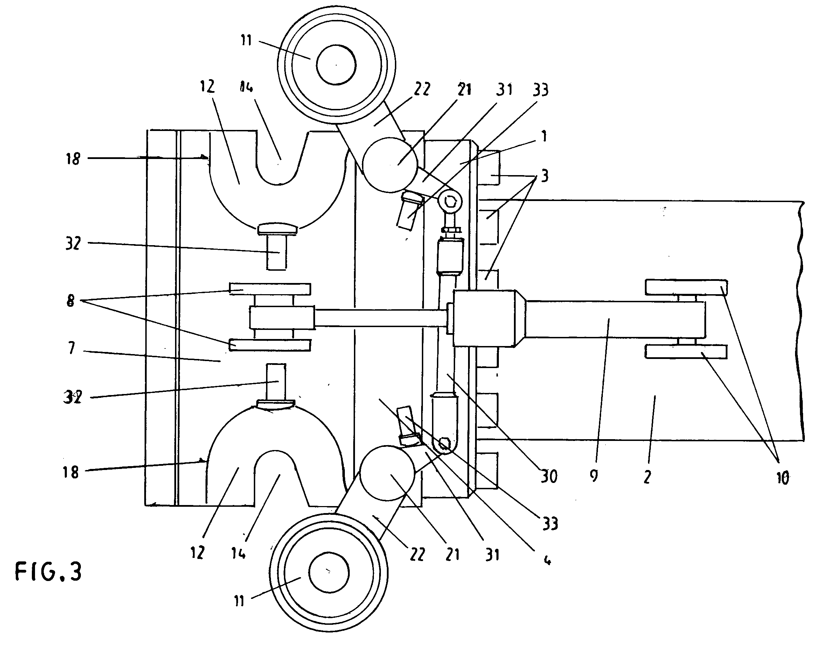

- Fig. 3: eine Ansicht von oben auf den Spritzkopf mit in in Reinigungsstellung befindlichen Preßeinheiten,

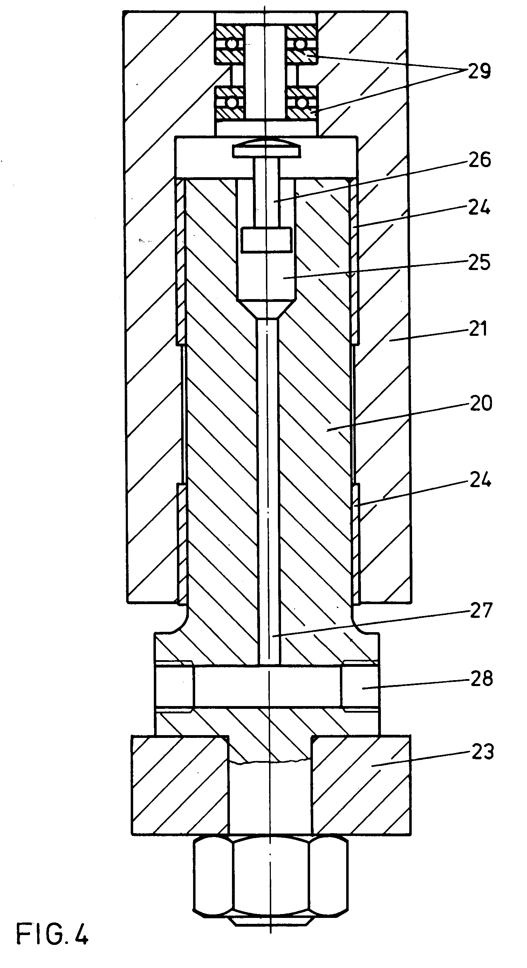

- Fig. 4: einen Schnitt durch den Zapfen des Halters.

An den Flansch 1 des Extruderzylinders 2 ist mit Schrauben 3 der feststehende Teil 4 des Spritzkopfes angeflanscht. An diesen feststehenden flanschartigen Teil ist das klappbare Unterteil 5 des Spritzkopfes mittels des Gelenkes 6 angelenkt, während das Oberteil 7 mittels eines nicht sichtbaren Gelenkes ebenfalls am feststehenden Teil 4 angelenkt ist. Oberteil 7 und Unterteil 5 weisen jeweils einen Lagerbock 8 auf, in welchem das eine Ende einer Kolben-Zylinder-Einheit 9 gelagert ist, deren anderes Ende im Lagerbock 10 gelagert ist, der am Extruderzylinder 2 befestigt ist. Oberteil 7 und Unterteil 5 werden durch eine Kolben-Zylinder-Einheit 11 dichtend zusammengepreßt. Die Stirnseite der Kolben-Zylinder-Einheit 11 stützt sich dabei auf dem Absatz 12 des Oberteiles 7 ab. Die Kolbenstange 13 liegt in einer Ausnehmung 14 des Oberteiles 7 und des Unterteiles 5 und trägt an ihrem Ende mittels einer Mutter 16 eine Ringscheibe 15, die durch den in der Kolben-Zylinder-Einheit 11 herrschenden Druck gegen den Absatz 17 an dem Unterteil 5 gepreßt wird. Die Absätze 12,17 bilden die Begrenzungen von Ausnehmungen 18, 19 im Unterteil 5 und im Oberteil 7.

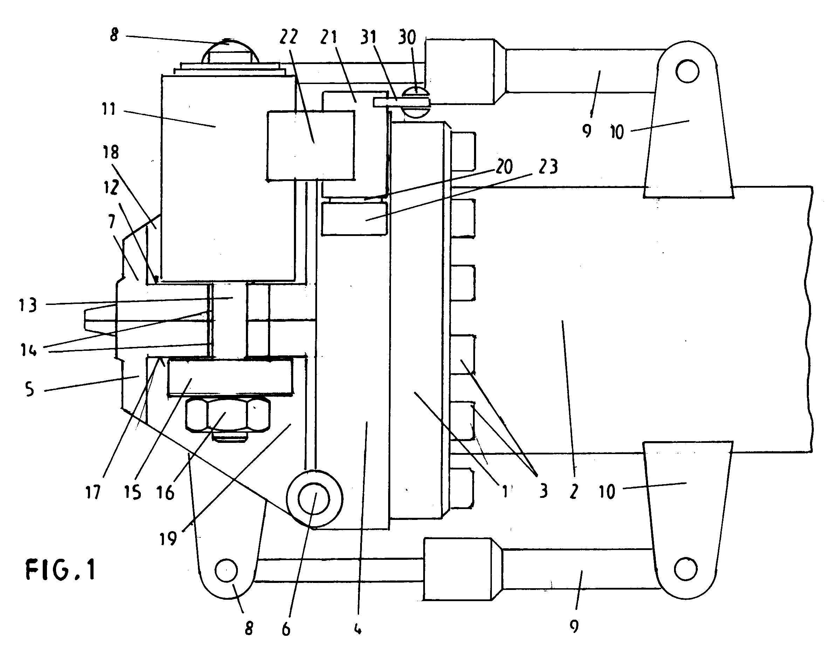

Um den in Fig. 1 in geschlossener Stellung gezeigten Spritzkopf öffnen zu können, ist die Kolben-Zylinder-Einheit 11 um die vertikal stehende Achse des Lagerzapfens 20 nach außen verschwenkbar. Auf diesem Lagerzapfen 20, der von der Konsole 23 getragen ist, ist die Hülse 21 der Halterung 22 gelagert. Die Halterung 22 verbindet die Hülse 21 mit dem Zylinder der Kolben-Zylinder-Einheit 11.

Zwischen der Hülse 21 und dem Lagerzapfen 20 befinden sich Gleitlager 24 aus einem zweckentsprechend gewählten Lagermaterial. Für die Öffnung des Spritzkopfes ist es erforderlich, die gegen den Absatz 12 pressende Stirnseite der Kolben-Zylinder-Einheit 11 von dieser Stirnseite abzuheben. Das erfolgt mittels der Kolben-Zylinder-Einheit 25, welche in einer zylindrischen Ausnehmung gelagert ist und über die Leitung 27 an die Druckleitung 28 angeschlossen ist. Die Kolbenstange 26 drückt gegen ein Kugellager 29, welches in der Hülse 21 gelagert ist, wodurch die ganze Hülse 21 mit der Halterung 22 und mit der Kolben-Zylinder-Einheit 11 so weit angehoben wird, daß die Stirnseite der Kolben-Zylinder-Einheit 11 den Absatz 12 nicht mehr berührt und daher frei zur Seite hin ausgeschwenkt werden kann.

Dieses Ausschwenken erfolgt mittels einer Kolben-Zylinder-Einheit 30, welche mit ihren Enden an Hebeln 31 angelenkt ist, die fest mit der Hülse 21 verbunden sind. Anschläge 32 begrenzen den Weg der Kolben-Zylinder-Einheiten 11 und bestimmen die Position beim Verschließen und Zusammenspannen von Oberteil 7 und Unterteil 5, während Anschläge 33 den Weg der Hebel 31 beim Öffnen begrenzen.

Die Öffnung des Spritzkopfes erfolgt in der Reihenfolge, wie bereits beschrieben, mit Hilfe einer elektrohydraulischen Folgesteuerung. Das Schließen des Spritzkopfes erfolgt in umgekehrter Reihenfolge.

### Liste der Bezugszeichen:

- 1: Flansch
- 2: Extruderzylinder
- 3: Schraube
- 4: feststehender Teil
- 5: Unterteil
- 6: Gelenk
- 7: Oberteil
- 8: Lagerbock
- 9: Kolben-Zylinder-Einheit
- 10: Lagerbock
- 11: Kolben-Zylinder-Einheit
- 12: Absatz
- 13: Kolbenstange
- 14: Ausnehmung
- 15: Ringscheibe
- 16: Mutter
- 17: Absatz
- 18: Ausnehmung
- 19: Ausnehmung
- 20: Lagerzapfen
- 21: Hülse
- 22: Halterung
- 23: Konsole
- 24: Gleitlager
- 25: Kolben-Zylinder-Einheit
- 26: Kolbenstange
- 27: Leitung
- 28: Druckleitung
- 29: Kugellager
- 30: Kolben-Zylinder-Einheit
- 31: Hebel
- 32: Anschlag
- 33: Anschlag

## Patentansprüche

1. Spritzkopf für einen Extruder,
insbesondere für die Benutzung in einer Extruder-Kalander-Kombination,
bestehend aus einem fest mit dem Extruderzylinder zu verbindenden, den zu extrudierenden Strang zylindrisch umgebenden Teil,
mit welchem zumindest ein weiteres den Extrusionsspalt hälftig umgebendes klappbares Teil über ein Gelenk verbunden ist,
welches mittels zweier beidseitig schwenkbar angeordneter Preßeinheiten mit dem anderen den Extrusionsspalt umgebenden Teil dichtend zusammenpreßbar ist,
dadurch gekennzeichnet,
daß die Preßeinheiten (11) Kolben-Zylinder-Einheiten sind, die im wesentlichen vertikal stehend angeordnet sind und
daß die Preßeinheiten (11) je an einem Halter (22) angeordnet sind, der um eine in wesentlichen vertikal verlaufende Achse verschwenkbar ist.

2. Spritzkopf nach Anspruch 1,
dadurch gekennzeichnet,
daß die mit den Preßeinheiten (11) dichtend zusammenzupressenden Teile (5,7) beidseitig eine Ausnehmung (14) aufweisen,
daß die Kolbenstange (13) der Preßeinheiten (11) an ihrem Ende ein Widerlager (15) trägt,
und daß die Kolbenstange (13) im Betriebszustand des Spritzkopfes (4,5,7) in dieser Ausnehmung (14) befindlich ist.

3. Spritzkopf nach Anspruch 1,
dadurch gekennzeichnet,
daß die Preßeinheit (11) und/oder ihr Halter (22) vertikal verschiebbar gelagert ist.

4. Spritzkopf nach Anspruch 3,
dadurch gekennzeichnet,
daß der Halter (22) mit seiner Hülse (21) einen Lagerzapfen (20) umfaßt, und
daß im Lagerzapfen (20) eine Kolben-Zylinder-Einheit (25) für das Anheben des Halters (22) angeordnet ist.

5. Spritzkopf nach Anspruch 3 und 4,
dadurch gekennzeichnet,
daß der Halter (22) in seiner den Lagerzapfen (20) umgebenden Hülse (21) mit einem Kugellager (29) versehen ist, gegen das die Kolbenstange (26) der Kolben-Zylinder-Einheit (25) für das Anheben des Halters (22) drückt.

6. Spritzkopf nach Anspruch 1,
dadurch gekennzeichnet,
daß mindestens eine weitere Kolben-Zylinder-Einheit (30) für die Verschwenkung der Halter (22) der Preßeinheiten (11) vorgesehen ist.

7. Spritzkopf nach Anspruch 6,
dadurch gekennzeichnet,
daß an jedem der beiden Halter (22) ein Verschwenkhebel (31) angeordnet ist, an dessen Ende die weitere Kolben-Zylinder-Einheit (30) für die Verschwenkung der Halter (22) der Preßeinheiten (11) angelenkt ist.

8. Spritzkopf nach Anspruch 1,
dadurch gekennzeichnet,
daß Anschläge für die Begrenzung des Weges der Halter (22) der Preßeinheiten (11) vorgesehen sind.

9. Spritzkopf nach Anspruch 1,
dadurch gekennzeichnet,
daß Endschalter für die Signalisierung der Position der Halter (22) der Preßeinheiten (11) vorgesehen sind, die Magnetventile für die Zufuhr von Druckmedium in die die Halter (22) verschiebende(n) Kolben-Zylinder-Einheit(en) schalten.

10. Spritzkopf nach Anspruch 1,
dadurch gekennzeichnet,
daß eine Schaltung mit zwei Einschaltern (34,48) vorgesehen ist,
dessen einer einen Bewegungsablauf
- Verschwenkung des oder der klappbaren Teile (5,7) in die Betriebsstellung
- Verschwenkung der Halter (22) der Preßeinheiten (11) in die Betriebsstellung
- Druckentlastung der den Halter (22) anhebenden Kolben-Zylinder-Einheit (25, 26)
- Inbetriebsetzung der Preßeinheiten (11)
und dessen anderer einen Bewegungsablauf
- Druckentlastung in den Preßeinheiten (11)
- Druckbeaufschlagung der den Halter (22) anhebenden Kolben-Zylinder-Einheit (25)
- Verschwenkung der Halter (22) der Preßeinheiten (11) in die Außerbetriebsstellung
- Verschwenkung des oder der klappbaren Teile (5,7) in die Außerbetriebsstellung (z.B.Reinigungsstellung)
einleitet.
